# DEMANDE DE BREVET EUROPEEN

(11) **EP 0 649 109 A1**
(43) Date de publication de la demande: **19.04.1995**
(21) Numéro de dépôt: 94402343.1
(22) Date de dépôt: 18.10.1994
(51) Int. Cl.: G06F 17/60

(54) **Procédé pour caractériser et utiliser le comportement d'usagers places en face de choix multiples et installation pour la mise en oeuvre de ce procédé**

(30) Priorité: 18.10.1993 FR 9312350
(71) Demandeur: Benthanane, François, F-92100 Boulogne-Billancourt (Hauts de Seine) (FR)
(72) Inventeur: Benthanane, François, F-92100 Boulogne-Billancourt (Hauts de Seine) (FR)
(74) Mandataire: Rataboul, Michel Charles

(57) **Abrégé**

Le procédé est caractérisé en ce que :
- on sélectionne des produits et/ou services et l'on détermine pour chacun de ceux-ci un avantage destiné à des usagers,
- on identifie chaque usager (U) par des données codées exploitables par des moyens informatiques,
- pour chaque usager considéré individuellement, on désigne des produits et/ou services parmi ceux qui ont été sélectionnés, en fonction de l'identification dudit usager,
- on communique à chaque usager d'une part les seules informations en clair (91-92) correspondant aux produits et/ou services désignés, et, d'autre part, l'énoncé de l'avantage correspondant, en les imprimant sur place, sur une feuille (97-98) que chaque usager (U) est susceptible de conserver et de consulter pendant tout son séjour sur le site,
- à la sortie du site, on identifie chaque usager (U),
- à la sortie du site, on identifie chaque produit et/ou service choisi sur le site par chaque usager, au moyen de données codées, on les saisit et on les mémorise par des moyens informatiques,
- on remet à chaque usager ayant choisi au moins un produit et/ou service désigné, l'avantage correspondant.

## Description

La présente invention concerne un procédé permettant d'étudier le comportement de personnes placées devant des choix multiples, en vue de caractériser ce comportement, d'en tirer un enseignement et d'adapter les offres proposées auxdites personnes afin de s'approcher autant que faire se peut du comportement ainsi étudié et caractérisé.

On a déjà pensé à rationnaliser les méthodes d'étude de comportements, notamment de clients dans des magasins à grande surface afin d'adapter au mieux les catégories de produits offerts à la vente et, même, d'influer sur les choix des clients.

Aucun des procédés connus ne donne entière satisfaction, en particulier parce qu'ils se basent toujours sur le principe de pré-choix dirigés.

Ainsi, on connaît le document de brevet WO-A-86/03.310 qui décrit un appareil comportant des moyens d'enregistrement d'un choix originel des usagers, à l'entrée d'un magasin, avant même qu'ils aient pu observer tous les produits placés sur les rayonnages de ce magasin.

En d'autres termes, on soumet les usagers à la contrainte de choisir d'abord un certain nombre de produits, en contrepartie d'un avantage tel qu'un rabais sur le prix de ces produits, alors que ces usagers sont appelés à choisir des produits sur les rayonnages et qu'il y a de fortes probabilités pour que les usagers aient souhaité d'autres produits que ceux qu'ils ont d'abord sélectionnés.

Si, par exemple, une remise de 2 Francs est proposée pour un paquet de céréales à 20 Francs, un usager pourra se laisser tenter et s'apercevra plus tard que ses céréales favorites sont offertes dans le magasin à 17 Francs.

Il résulte d'un tel procédé que l'usager est mécontent car non seulement il est incité à ne pas acheter le produit auquel il est attaché mais en plus il devrait débourser 18 Francs au lieu de 17.

Ce procédé est donc à exclure si l'on veut donner satisfaction aux usagers et, par là, les fidéliser.

On connaît aussi le document de brevet FR-A-2.682.502, du même type que le précédent, en ce qu'il prévoit des bornes interactives à l'entrée d'un magasin, ce qui oblige les usagers à effectuer un choix préalablement à leur entrée dans le magasin, ce qui s'avère souvent prématuré et ce qui mécontente beaucoup de clients, lesquels auront tendance, à l'avenir, de refuser ce choix préalable, au mieux pour revenir plus tard à la borne, au pire pour ne plus revenir dans ce magasin.

Ce document prévoit, en outre, la remise d'une carte, sans délai ni critère de sélection, mais qui impose un questionnaire afin de mémoriser sur la carte : l'âge, le sexe, la profession, le nombre d'enfants, etc. pour chaque usager.

Or, on sait que beaucoup de personnes sont réticentes à donner tous ces renseignements intimes qui les privent de leur anonymat, car elles sont inquiètes quant à la raison de cette demande de renseignements et à l'usage qui peut en être fait.

Le document de brevet EP-A-0.525.947 décrit un procédé pour l'analyse des réactions de clients par rapport à des messages publicitaires.

Ce procédé nécessite l'usage d'un appareil situé au domicile de chaque client et suppose la participation active et réelle des personnes à qui l'on remet un appareil, de sorte que le procédé prévoit la remise de récompenses à chaque personne docile.

Par ce procédé, il est possible d'apprécier la réaction positive ou négative de chaque client, en fonction des achats effectués par rapport aux messages publicitaires correspondants.

Le document de brevet US-A-5.185.695 décrit un procédé pour la gestion de coupons entre des fabricants de produits et des revendeurs.

Le document de brevet EP-A-0.173.835 concerne une méthode et un dispositif pour la distribution de bons de réduction imprimés dans le magasin où à lieu la vente.

Aucun des documents analysés ci-dessus ne procure aux usagers à la fois une information préalable, à l'entrée d'un site, une totale liberté de choix pendant le séjour des usagers sur le site et une récompense à la sortie du site, correspondant à des avantages annoncés aux usagers, le tout étant personnalisé en fonction des caractéristiques de chaque usager, grâce à un traitement informatique centralisé.

La présente invention présente toutes ces caractéristiques et remédie par conséquent à tous les inconvénients des systèmes existants.

A cette fin, l'invention a pour objet un procédé pour étudier et utiliser le comportement d'usagers devant procéder à des choix, notamment dans des sites où sont proposés des produits et/ou des services, en vue d'effectuer des prévisions et de concevoir des incitations de choix, du type prévoyant :
- à l'entrée d'un site, la communication à des usagers d'informations sur des produits et/ou services selectionnés et associés à des signes d'identifaication,
- à la sortie du site, la remise d'un ou plusieurs avantages résultant des choix exercés réellement sur le site par chaque usager, caractérisé en ce que :
- on affecte à chaque produit et/ou service des signes d'identification d'une part en clair et d'autre part sous forme de données codées exploitables par des moyens informatiques,
- on sélectionne des produits et/ou services et l'on détermine pour chacun de ceux-ci un avantage destiné à des usagers,
- on identifie chaque usager par des données codées exploitables par des moyens informatiques,
- pour chaque usager considéré individuellement, on désigne des produits et/ou services parmi ceux qui ont été selectionnés, en fonction de l'identification dudit usager,
- on communique à chaque usager d'une part les seules informations en clair correspondant aux produits et/ou services désignés, et, d'autre part, l'énoncé de l'avantage correspondant, en les imprimant sur place, sur une feuille que chaque usager est susceptible de conserver et de consulter pendant tout son séjour sur le site,
- on lit et l'on mémorise par des moyens informatiques, en un seul ensemble indissociable d'une part les données codées d'identification de chaque usager, et, d'autre part, les données codées correspondant aux données en clair communiquées,
- à la sortie du site, on identifie chaque usager,
- à la sortie du site, on identifie chaque produit et/ou service choisi sur le site par chaque usager, au moyen de données codées, on les lit et on les mémorise par des moyens informatiques,
- parmi ces données codées, on détecte éventuellement celle qui ont été mémorisées avec les données codées d'identification de chaque usager,
- on remet à chaque usager ayant choisi au moins un produit et/ou service désigné, l'avantage correspondant.

Selon d'autres caractéristiques de ce procédé :
* on identifie chaque usager par un code individuel figurant sur un objet portatif tel qu'une carte, préalablement remis en contrepartie d'informations communiquées par chaque usager, notamment lors d'une ouverture de crédit, de la concession de facilités de paiement ou d'une autorisation d'accès;
* on identifie chaque usager par un code individuel attribué lors de l'arrivée de l'usager sur le site, en contrepartie d'informations communiquées par chaque usager, et devant figurer sur un objet portatif tel qu'une carte;
* on procède à trois sélections distinctes parmi tous les produits et/ou services proposés sur le site :
   - la première comprenant des produits et/ou services pour lesquels on remet un avantage indistinctement à tous les usagers, y compris ceux qui ne sont pas identifiés, ayant choisi au moins l'un de ces produits et/ou services,
   - la deuxième comprenant des produits et/ou services pour lesquels on remet un avantage aux seuls usagers identifiés et ayant choisi au moins l'un de ces produits et/ou services,
   - la troisième comprenant des produits et/ou services désignés parmi ceux de la deuxième sélection en fonction des caractéristiques de chaque usager identifié et pour lesquels on ne remet un avantage qu'aux seuls usagers dont les données codées sont associées aux données codées desdits produits et/ou services désignés.
* on imprime en clair, sur la feuille remise à l'entrée du site, le nom et, le cas échéant, le prénom de certains au moins des usagersidentifiés.

L'invention a également pour objet une installation pour étudier et utiliser le comportement d'usagers devant procéder à des choix, notamment dans des sites où sont proposés des produits et/ou des services, en vue d'effectuer des prévisions et de concevoir des incitations de choix, du type comprenant un réseau informatique de base composé d'au moins un ordinateur central propre au site, et, pour chaque sortie du site, d'un scanneur de saisie de codes d'identification de produits et/ou services, d'un terminal de calcul relié audit scanneur, et d'une imprimante de tickets dits "tickets de caisse" devant être remis à chaque usager, caractérisée en ce qu'elle comprend un second réseau informatique distinct du premier et comportant :
- une multiplicité d'objets portatifs portant des données codées d'identification individuelle d'usagers,
- au moins un ensemble situé à l'entrée du site et formé d'un lecteur d'objets portatifs d'identification d'usagers, associé à un moyen de lecture des données codées d'identification d'usagers, d'un distributeur de feuilles à imprimer, d'une imprimante et d'un distributeur de feuilles imprimées,
- autant de terminaux de sortie qu'il y a de terminaux de calcul à chaque sortie du site, chacun de ces terminaux de sortie étant relié d'une part à un terminal de calcul comprenant un lecteur de données codées d'identification de produits et/ou services et un lecteur d'objets portatifs d'identification d'usagers,
- au moins un ordinateur central.

Selon d'autres caractéristiques de cette installation :
* le distributeur de feuilles à imprimer est un margeur qui contient des feuilles découpées;
* le distributeur de feuilles à imprimer est une bobine des feuilles non découpées;
* les feuilles à imprimer présentent des zones pré-imprimées et des zones vierges;
* les feuilles issues du distributeur ne présentent que des zones imprimées;
* des feuilles issues du distributeur présentent des mentions spécifiques à certains usagers individuels ou à certaines catégories d'usagers;
* certains au moins des tickets de caisse remis à des usagers présentent une liste de produits et/ou services choisis par lesdits usagers, le prix de chacun de ces produits et/ou services, et au moins un montant venant en soustraction du total des prix, ce montant constituant un avantage consenti à l'usager correspondant.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique d'ensemble illustrant une installation conforme à linvention.

La figure 2 est une vue schématique d'ensemble, illustrant le fonctionnement d'une installation conforme à l'invention, appliquée à un magasin de détail à grande surface, organisé en libre service.

La figure 3 est un schéma illustrant les étapes de fonctionnemnet d'une borne d'accès à l'installation, placée à l'entrée du site équipé.

La figure 4 est une vue schématique d'une liste pré-imprimée, devant être placée dans un margeur de la borne d'accès, en amont d'une imprimante.

La figure 5 est une vue schématique d'une liste personnalisée au moyen de l'imprimante de la borne d'accès.

La figure 6 est un schéma illustrant les étapes de fonctionnement de l'ordinateur central, en liaison avec un terminal de sortie.

La figure 7 est un schéma illustrant les étapes de fonctionnement d'un terminal de sortie conforme à l'invention et associé à un terminal habituel de caisse.

En se reportant au dessin, on voit qu'une installation conforme à l'invention comprend un réseau informatique distinct du réseau informatique que l'on trouve habituellement dans les magasins de détail en libre service.

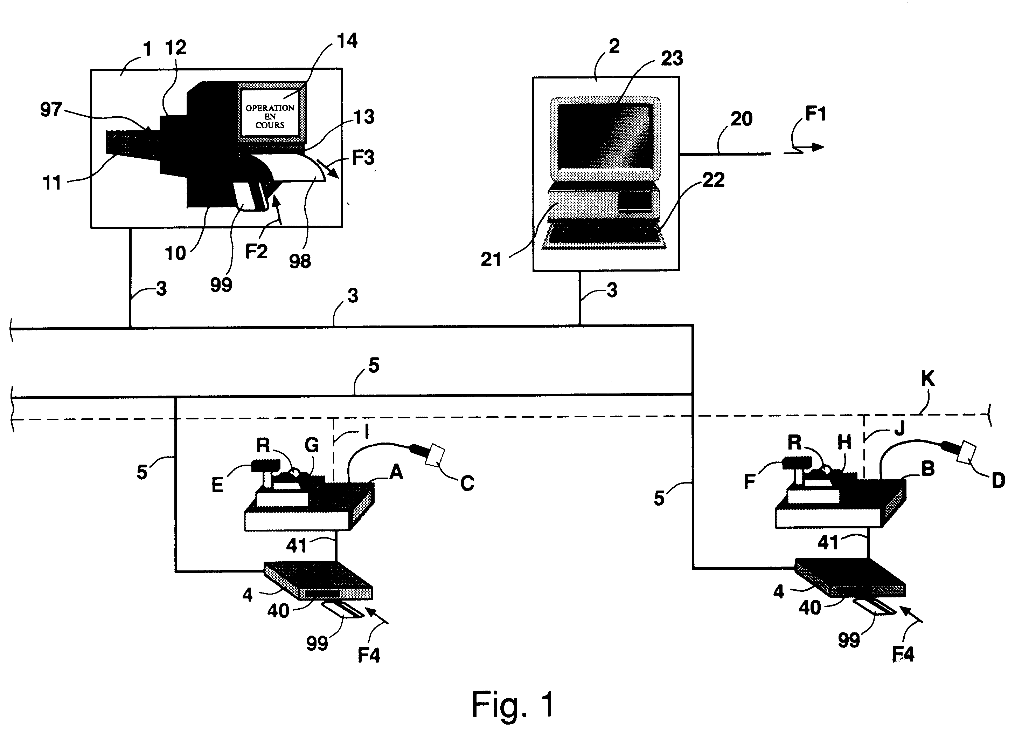

Ce réseau informatique habituel est représenté en traits pointillés sur la figure 1 et ne fait pas partie de l'invention.

Il est composé de postes de caisses de sortie (ou "terminaux de caisse") de type connu A et B munis chacun d'un lecteur optique (ou "scanneur") respectivement C et D pour la lecture de codes à barres, d'un écran respectivement E et F pour exposer aux usagers les prix des produits.

En fin de processus, le total à payer, et d'une imprimante respectivement G et H pour l'édition de tickets de caisse.

Tous les postes de caisses de sortie (ici on n'en a représenté que deux), sont reliés par des câbles I, J et K à un ordinateur central (non représenté) propre au site considéré et qui, ici est un magasin de vente au détail en libre service.

Parallèlement à ce réseau informatique habituel, l'invention prévoit un second réseau informatique qui comprend d'une part au moins un ensemble 1 situé à l'entrée du site et relié d'une part à un ordinateur central 2 par un réseau câblé 3 (ou équivalent) et d'autre part à autant de terminaux de sortie 4 qu'il y a de postes de caisses de sortie (A-B), ces terminaux 4 étant également reliés à l'ordinateur central 2 par un réseau câblé 5 (ou équivalent).

L'ordinateur central 2 est propre au site équipé d'une à l'installation conforme à l'invention.

Il est relié par un réseau câblé 20 (ou équivalent) à un ordinateur général (non représenté), associé à d'importantes mémoires, et déporté hors du site, ce que l'on a symbolisé par une flêche en "Z" F1.

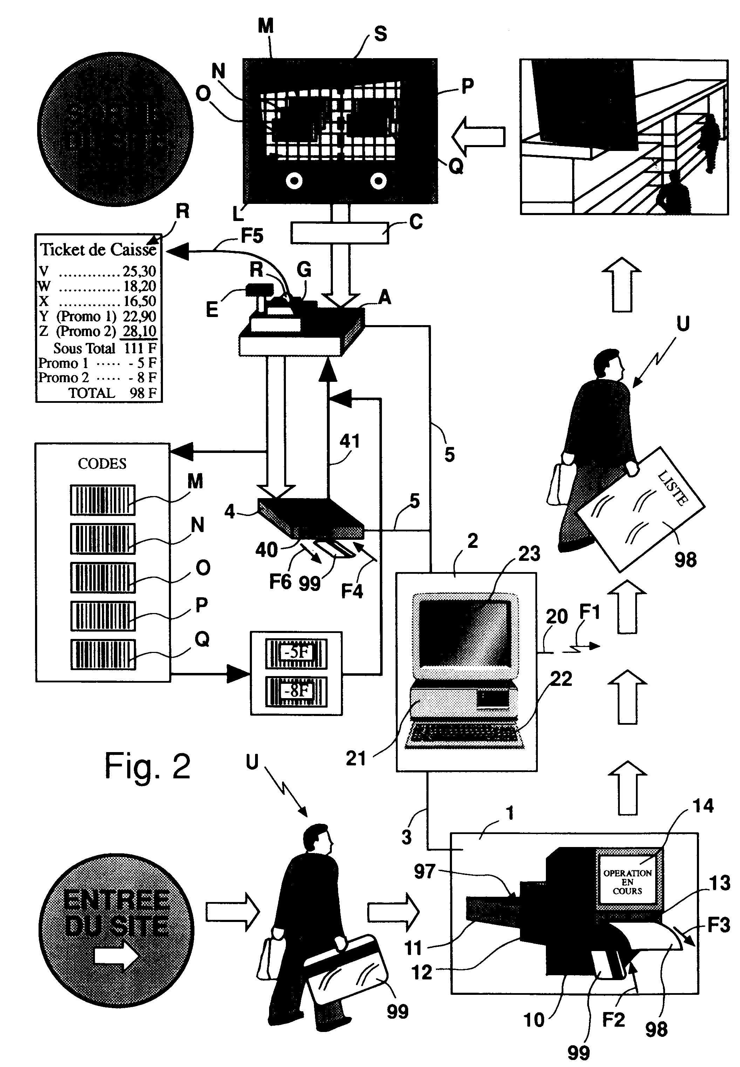

On va maintenant décrire le procédé conforme à l'invention en regard de la figure 2, sur laquelle les mêmes éléments que ceux de la figure 1 portent les mêmes références.

Selon un mode de réalisation particulier, l'ensemble 1 comprend :
- un lecteur 10 pour des objets portatifs d'identification d'usagers, cet objet pouvant être, par exemple, une carte à mémoire (à bande magnétique, à microprocesseur ou équivalent) associé à un lecteur des données codées mémorisées sur chaque objet portatif,
- un distributeur de feuilles à imprimer qui est constitué ici par un margeur 11 devant contenir des feuilles à imprimer déjà découpées et individualisées.
- une imprimante 12 située en aval du margeur 11,
- un distributeur 13 de feuilles imprimées situé en aval de l'imprimante 12.
- un écran de visualisation 14,

Selon un autre mode de réalisation, l'installation suppose l'existence d'une multiplicité d'objets portatifs d'identification des usagers, c'est-à-dire de cartes selon les habitudes actuelles.

Les modalités de délivrance de ces cartes sont très liées aux données psychologiques d'une population donnée : par habitude, par caractère, par éducation ou par culture générale, il est plus ou moins facile d'obtenir des renseignements pour initialiser les cartes, même si les renseignements sont seulement ceux qui sont utiles à tracer un profil socio-professionnel de chaque usager : nom, prénom, sexe, âge, situation de famille, nombre d'enfants, profession etc.

Pour éviter cet écueil, on peut réserver l'accès à l'installation aux seuls usagers déjà porteurs d'une carte accréditive, remise antérieurement, à la demande même des usagers qui souhaitaient profiter des avantages liés à cette carte : possibilité de crédit, rabais, facilités de paiement, etc.

De toutes façons, la question est ici de savoir si un usager donné possède ou pas une carte d'identification.

S'il n'en a pas, on peut penser à de multiples modalités commerciales de remise d'une telle carte, modalités qui sont étrangères à l'invention proprement dite.

S'il possède une carte d'identification, quelles qu'en soient la raison et les conditions d'attribution, l'usager U se présente à l'entrée du site et se dirige vers l'ensemble ou "borne" 1.

La borne 1 peut être accessible directement ou être mise sous le contrôle d'une hôtesse.

Pour la simplicité de l'exposé, on suppose ici que l'usager U, titulaire de la carte 99 est un client habituel du site, de sorte que l'ordinateur 2 possède en mémoire non seulement ses caractéristiques socio-professionnelles, mais également des statistiques de ses achats, qui sont issues des relevés opérés par les terminaux de sortie 4, lors de chaque passage.

Si la borne 1 est directement accessible, l'usager U introduit sa carte 99 dans le lecteur 10 selon la flêche F2 et ses coordonnées sont immédiatement prises en compte.

L'écran 14 peut être réduit à un simple afficheur à cristaux liquides car il ne sert qu'à informer l'usager U sur la manipulation de la carte 99, les messages affichés étant du genre "BONJOUR", "INTRODUISEZ VOTRE CARTE", "VEUILLEZ PATIENTER", "OPERATION EN COURS", "RETIREZ VOTRE CARTE", etc.

On voit donc que la borne 1 n'est pas interactive puisque l'usager ne fait qu'y introduire sa carte et n'a pas de réponse à formuler ni de choix à opérer.

L'ordinateur central 2 comprend une unité centrale 21, un clavier de commande 22, et un écran de visualisation 23.

L'ordinateur central 2 ayant reconnu l'usager U par son numéro d'identification, on utilise un logiciel qui tient compte de deux séries de facteurs propres à l'usager :
- son profil socio-professionnel,
- ses habitudes d'achats.

Le logiciel établit alors un programme d'avantages (essentiellement des remises de prix) propres à l'usager U et qui peut être trés différent de celui que le logiciel aurait établi pour un usager ayant des caractéristiques différentes.

Si, par exemple, l'usager U a des enfants dans une certaine tranche d'âges, on pourra lui proposer des remises sur les yaourts, les céréales ou les jus d'orange plutôt que sur les boissons alcoolisées.

Le programme ayant été établi, l'ordinateur central 2 commande l'imprimante 12 qui prélève une feuille 97 dans le margeur 11 et y imprime les offres de promotions qui ont été reconnues par le logiciel comme étant les mieux adaptées à l'usager U.

L'usager U reçoit par le distributeur 13, selon la flêche F3, une feuille imprimée 98 qui porte la liste des offres dont il peut bénéficier.

L'usager U reprend sa carte 99 et conserve la liste 98 qu'il peut consulter autant qu'il le souhaite pendant son séjour sur le site.

On note que la borne n'est pas de type interactif car l'usager n'exécute aucune opéraiton autre que celle qui consiste à introduire sa carte 99 dans le lecteur de carte 10 et n'a donc pas à répondre à des questions ou à exercer des choix.

C'est sur le site lui-même que l'usager fait ses choix librement en disposant de tout le temps voulu, et profite ou pas des promotions de certains articles, en toute indépendance.

Toutefois, étant donné que la liste 98 a été établie en tenant compte de ses habitudes, du volume consommé, de sa fréquentaiton du site et en outre, de ses caractéristiques socio-professionnelles, les promotions offertes sont extrêmement bien ciblées et correspondent très précisément aux desiderata du producteur et du revendeur.

Au lieu de prévoir des feuilles 97 déjà découpées, on peut utiliser une bobine (non représentée) formée d'une bande pré-imprimée et repérée, de sorte que la borne 1 doit comprendre un mécanisme de coupe au format, ainsi que cela est connu en soi.

Tous les achats, sans exception, sont placés dans un chariot de type connu L et, lorsque ses achats sont terminés, l'usager U se dirige comme d'habitude vers une des caisses de sortie.

Les articles achetés sont tous munis de signes d'identification en clair pour permettre le choix direct par les usagers, et de données codées exploitables par des moyens informatiques.

Ici, on a schématisé ces données codées en adoptant le système du "code à barres", susceptible d'être lu par le lecteur optique, ou scanneur C.

On remarque que l'on a symbolisé, par une ligne en pointillés S, une séparation en deux parties du chariot L, afin de bien montrer que ce chariot contient tous les achats, lesquels se subdivisent en deux : ceux qui ne bénéficient d'aucune promotion et qui seront donc payés à leur prix normal lorsque l'usage U passera à la caisse de sortie et ceux qui correspondent à des promotions et qui donneront lieu à un rabais lorsque l'usager U passera à la caisse de sortie.

Trois produits à prix normal sont représentés par leur code à barres M, N et O, tandis que deux produits en promotion (qui figurent sur la liste 98) sont représentés par leur code à barres P et Q.

Son tour venu, l'usager U introduit sa carte 99 selon la flêche F4 dans un lecteur 40 que présente le terminal de sortie 4.

On pourrait, bien entendu, utiliser le lecteur de cartes bancaires qui équipe habituellement les terminaux de caisse existants, ce qui simplifie le terminal de sortie 4.

A noter que ce terminal 4 est, en fait, ce que l'on appelle courramment une "carte électronique", ce qui permet à celle-ci d'être soit placée dans un coffret spécifique (comme représenté) soit intégrée au terminal de caisse A-B car cette opération est simple et ne comporte aucun risque de perturbation du réseau informatique du site.

La caissière soumet le code à barres de chaque produit acheté au scanneur C et les informations qui en découlent sont normalement exploitées et traitées, sans que l'installation conforme à l'invention puisse géner en quoi que ce soit ces opérations.

Il en résulte la comptabilisation des achats et l'impression d'un ticket de caisse R plus ou moins détaillé selon les cas existants.

Une liaison 41 réunit le terminal de sortie 4 et le terminal de caisse A (quand la carte électronique est intégrée au terminal de caisse, cette liaison est évidemment interne) pour boucler la transaction "normale" et la transaction des remises, celle-ci étant gérée non par le réseau informatique I, J, K du site mais par celui de l'installation conforme à l'invention.

Le terminal de sortie 4 recueille les informations sur tous les produits achetés ainsi que le numéro de carte d'identification de l'usager U. Ces informations sont transmises en temps réel au serveur 23 dont le logiciel gère les statistiques et les prévisions.

Le terminal 4 reconnaît les codes à barres P et Q comme étant ceux de produits en promotion. Il calcule le montant de chaque réduction (ici 5 Francs et 8 Francs) et transmet l'information au terminal de caisse A par la liaison 41.

Le terminal de caisse A effectue les calculs et procède à l'impression correspondante sur le ticket de caisse R qui, lorsque toute transaction est terminée, est extrait selon la flêche F5 et est remis au client qui peut prendre connaissance en clair :
- du prix de chaque article,
- de total de sa dépense,
- du rabais de chaque article en promotion,
- du total des rabais,
- du montant effectivement payé ou à payer.

Les opérations sont terminées, l'usager reprend sa carte 99 du lecteur 40 selon la flêche F6, conserve son ticket de caisse, récupère ses achats et sort du site.

La carte 99 peut être une carte d'accréditation propre au magasin et permettant à l'usager de payer plus tard, notamment par prélèvement bancaire automatique, ou de payer de manière échelonnée.

Elle peut aussi être délivrée à toute personne qui désire profiter des promotions personnalisées en plus des promotions générales et qui, pour cela, accepte de donner à une hôtesse spécialement formée des renseignements que la gestion du système estime indispensable.

Le terminal 4 est conçu et programmé, sous le logiciel de l'ordinateur central 2, pour établir un rapprochement entre l'usager U et les produits qu'il vient d'acheter, en vue de lui proposer ultérieurement des promotions coordonnées.

Bien entendu, selon le logiciel de l'ordinateur central 2, la puissance de calcul de ce dernier et ses capacités en mémoire, les données receuillies peuvent être plus ou moins nombreuses et détaillées. On peut leur adjoindre d'autres données de l'environnement : date, heure, proximité de fêtes ou d'anniversaires, conditions atmosphériques, etc.

Selon l'hypothèse retenue ici, les deux produits bénéficiant d'une promotion et ayant les codes P et Q figurent sur la liste 98 comme étant particulièrement destinés à l'usager U.

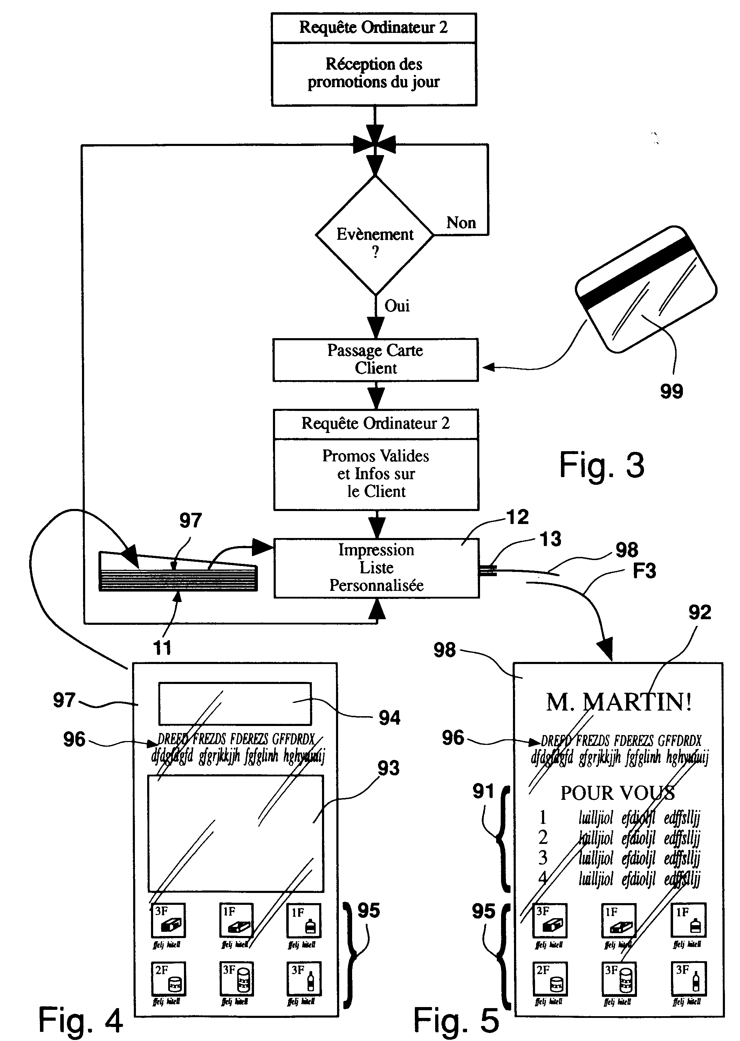

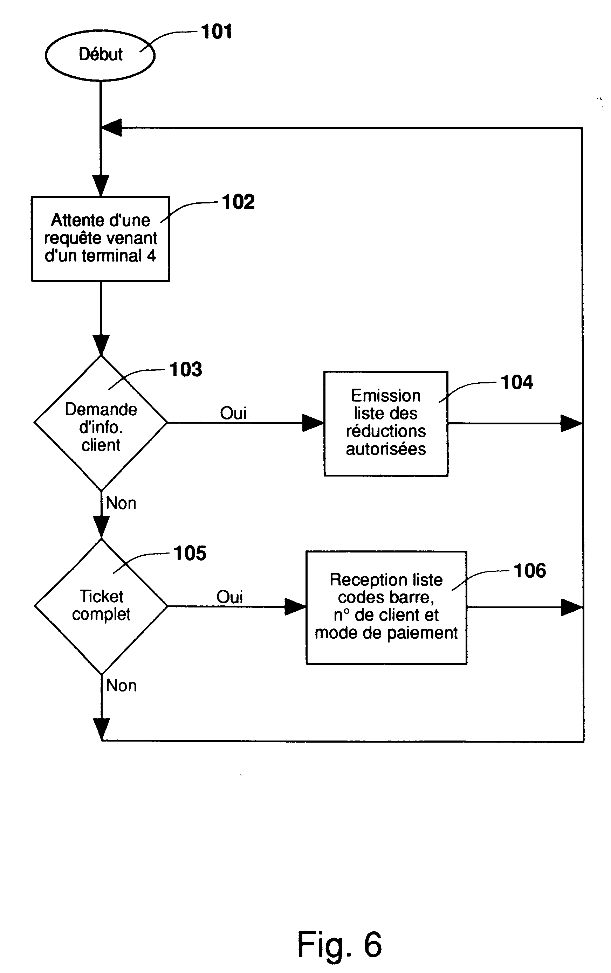

Mais, en se reportant aux figures 4 et 5, on voit que le margeur 11 de l'imprimante 12 reçoit non pas des feuilles vierges mais des feuilles pré-imprimées, éventuellement recto et verso, ce qui permet de donner aux usagers des informations de toutes sortes, y compris des offres de produits en promotion qui ne sont pas personnellement réservées aux usagers identifiés mais aux usagers en général.

Ainsi, sur la figure 4, on voit une feuille 97 qui présente des impressions valables pour tous les usagers et qui se subdivisent en deux : les impressions 96 sont des mentions d'accroche, par exemple, tandis que les impressions 95 sont des vignettes représentant des produits et sur lesquelles figure le montant du rabais correspondant.

En revanche, la feuille 97 présente deux zones vierges 94 et 93.

Après impression des offres personnalisées, la feuille 98 porte, bien entendu, les mentions 96 et 95 mais, en outre, des impressions nouvelles, spécifiques, 92 dans la zone 94 et 91 dans la zone 93.

Les mentions 92 situées dans la zone 94, peuvent comprendre un message de bien venu assorti du nom et, même, du prénom de l'usager.

Les mentions 91 de la zone 93 sont des offres de promotions particulièrement ciblées et qui peuvent tenir compte de multiples critères gérés par l'ordinateur central 2, voire par l'ordinateur général.

Les feuilles 97 ne portant que des mentions et des offres de promotion valables pour tous les usagers, y compris ceux qui ne sont pas identifiés, il est possible d'en distribuer à l'entrée du site ou d'en placer sur un présentoir disposé sur le passage des usagers, à l'entrée du site.

Il est également possible de prévoir une distribution directe des feuilles 97 par le distributeur 13 de la borne 1, non plus en introduisant une carte d'identification, mais en appuyant sur un simple bouton qui commande l'action de distribution sans intervention de l'imprimante 12.

L'ordinateur central 2 recueille toutes les informations saisies par le terminal de sortie 4 et délivre chaque jour l'ensemble des réductions qui ont été accordées aux usagers.

Ainsi, le magasin récupère rapidement, auprès de la société de gestion du système, le montant de son manque à gagner sur les achats effectués en promotion.

L'ordinateur central 2 délivre également un compte rendu sur les achats en promotion réalisés dans une certaine période : par jour, par semaine, par mois, par périodes caractéristiques : vacances, fêtes de fin d'année, par trimestre, etc. étant entendu qu'une période représentative du comportement des usagers est d'au moins une année, afin de "balayer" toutes les périodes caractéristiques et significatives pour la gestion.

En se reportant maintenant à la figure 6, on voit des étapes essentielles de fonctionnement du logiciel de l'ordinateur central 2.

En position 101 :
- L'ordinateur 2 met à jour les promotions de la journée.
- Il se fait connaître sur le réseau de l'installation afin que les cartes 99 d'identification des usagers puissent le contacter.

En position 102 :
- L'ordinateur central 2 est à l'écoute des requêtes de l'ensemble des cartes d'identification 99 connectées au réseau de l'installation.
- Plusieurs cartes 99 peuvent émettre une requête en même temps. Dans ce cas, les requêtes sont traitées simultanément grâce à un système de gestion multiprocessus, et de partage du temps de traitement.

En position 103 :
- Intervient une requête. Il s'agit d'une demande d'identification d'un usager, en vue de connaître son compte de promotions. Cette requête concerne le numéro d'identification mémorisé sur la carte 99 de l'usager.

En position 104 :
- L'ordinateur central 2 recherche dans sa base de données le compte de promotions de l'usager, associé à son numéro d'identification issu de la carte 99.
- Il dresse la liste des rabais autorisés, ce qui peut être fait à la volée ou être pré-établi.
- La liste des rabais autorisés consiste en une table décrivant :
   * le code à barres des produits en promotion,
   * le montant du rabais,
   * le mode de calcul des rabais (par lot, systématique, en association avec un autre produit, etc.,
   * un message devant être imprimée par l'imprimante 12 de la borne 1,
   * un message devant être imprimé par l'imprimante G du terminal de caisse A.

En position 105 :
- La requête est une demande d'émission d'un ticket de caisse R, à l'issue du paiement par l'usager.
- Ce ticket de caisse R contient des informations qui ont été échangées entre une carte d'identification 99 et un terminal de caisse A.

En position 106 :
- l'ordinateur central 2 reçoit une liste d'informations sur les achats de l'usager et sur les promotions qu'il a utilisées.
- Cette liste d'informations constitue un bloc qui peut être immédiatement intégré à la base de données de l'ordinateur central 2 ou être traité en différé.
- Ces informations mettent à jour le compte du client et la table de promotions de l'ordinateur central 2.
- Ces informations consistent en une table et qui décrivent :
   * le numéro d'identification de l'usager,
   * le mode de paiement de l'usager (espèces, chèque, carte bancaire, etc.),
   * le code à barres de chaque produit et/ou service acheté,
   * la quantité achetée,
   * le prix courant du produit et/ou service acheté,
   * la promotion associée à ce produit et/ou service,
   * le montant du rabais consenti.

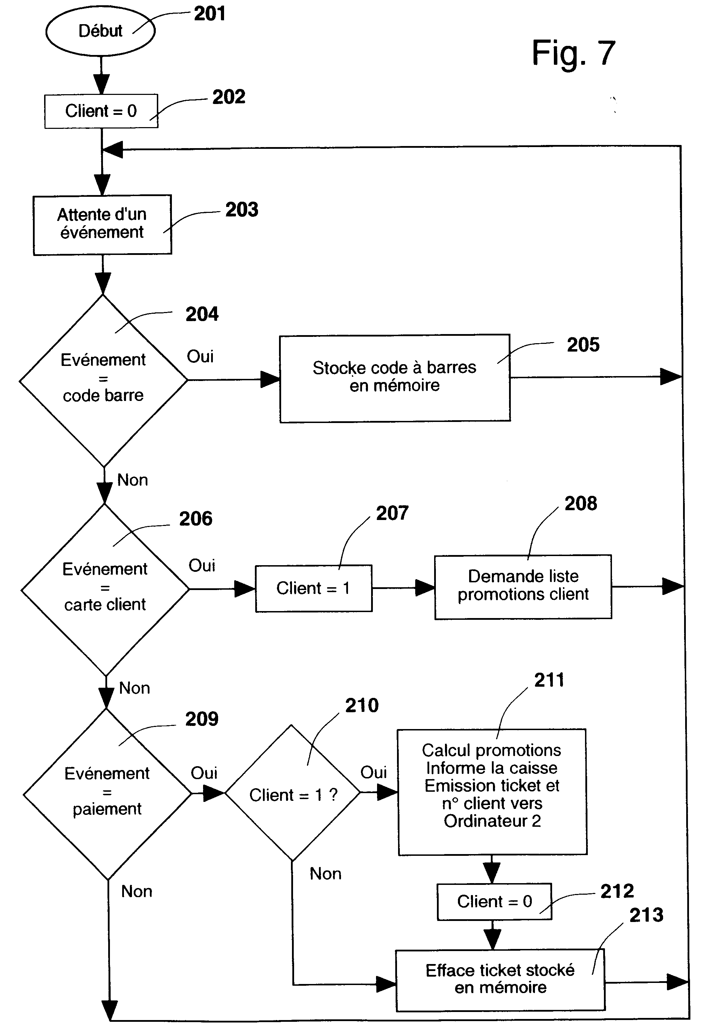

Sur la figure 7, on voit des étapes essentielles du fonctionnement d'un terminal de sortie 4.

En position 201 :
- Le terminal 4 repère l'ordinateur central 2 en fonctionnement.

En position 202 :
- "CLIENT" est une variable qui peut être à l'état 0 ou à l'état 1. L'état 0 signifie qu'il n'y a pas d'usager connecté par sa carte d'identification 99. L'état 1 signifie qu'il y a au moins une carte d'identification 99 connectée. Cette variable est initialisée à l'état 0.

En position 203 :
- En attente d'un événement pouvant déclencher une opération :
* connexion d'une carte d'identification 99,
* réception d'un message provenant d'un terminal de caisse, indiquant un achat de produit.

En position 204 :
- Si l'événement est la détection d'un code à barres, il s'agit d'un message provenant d'un terminal de caisse.
- Ce code à barres représente le passage en caisse d'un achat, passage qui est communiqué au terminal de sortie 4.
- Ce code à barres est accompagné d'autres informations, notamment :
   * la quantité achetée,
   * le prix courant du produit et/ou service acheté.

En position 205 :
- Le code à barres reçu, ainsi que les informations associées sont mémorisés dans la mémoire du terminal de sortie 4.
- Tous les codes à barres reçus servent à constituer le ticket de caisse R de l'usager. Cela revient à dire qu'une copie du ticket de caisse R est dans la mémoire du terminal de sortie 4.

En position 206 :
- Si l'événement est la détection de la présence d'une carte d'identification 99 connectée, il s'agit d'un message provenant du terminal de caisse A ou du lecteur 40.
- Cet événement est simplement constitué par un message contenant le numéro d'identification de l'usager, numéro qui est mémorisé sur sa carte 99.

En position 207 :
- "CLIENT" à l'état 1. A cette étape, le terminal de sortie 4 considère qu'un usager ayant droit à des promotions est présent à la caisse.

En position 208 :
- Le terminal de sortie 4 adresse alors à l'ordinateur central 2 une requête pour connaître l'état du compte de promotions de l'usager. Ces promotions ne seront utilisées qu'au moment du paiement à la caisse par l'usager.

En position 209 :
- Si l'événement est de type paiement, il s'agit d'une fin de transaction et le terminal de caisse A transmet au terminal de sortie 4 le mode de paiement adopté par l'usager.

En position 210 :
- "CLIENT" à l'état 1, signifie que l'usager a droit à des promotions.

En position 211 :
- L'usager ayant droit à des promotions, le terminal de sortie 4 procède aux traitements suivants :
* calcul des promotions pour la copie du ticket de caisse stocké dans la mémoire du terminal de sortie 4,
* émission des rabais au terminal de caisse A, afin d'effectuer la déduction à l'usager,
* émission d'une copie du ticket de caisse associé au numéro d'identification et envoi à l'ordinateur central 2, afin d'enrichir et de mettre à jour la base de données.

En position 212 :
- "CLIENT" à l'état 0, ce qui signifie que l'opération de traitement des achats à la caisse est terminée.
- Le terminal de sortie 4 se met en attente d'un nouvel usager, en positionnant à l'état 0 la variable "CLIENT".

En position 213 :
- Après paiement par l'usager, les informations concernant le ticket de caisse de l'usager sont effacées de la mémoire du terminal de sortie 4.

On voit que l'invention permet de fidéliser une clientèle et de fournir aux sites fréquentés une information en temps réel.

Le rapprochement entre chaque usager et les produits qu'il choisit permet une personnalisation très efficace des promotions, ce qui satisfait à la fois les producteurs, les revendeurs et les clients.

L'invention permet de gérer un système de remises et de promotions et de tenir des statistiques en temps réel, ce qui ne peut que satisfaire pleinement les industriels producteurs et les distributeurs vendeurs, puisqu'ils peuvent connaître en temps réel à la fois le nombre de produits vendus et le profil des acheteurs.

Pour le distributeur, l'installation conforme à l'invention fournit des informations instantanées, afin de pouvoir optimiser non seulement ses approvisionnements généraux mais aussi ses rayonnages, et d'avoir une gestion de chaque rayon en temps réel.

D'un point de vue matériel, il faut souligner que l'installation conforme à l'invention n'entraîne aucune modification de la configuration de l'installation existant sur le site et ne provoque aucune perturbation.

Seul le protocole de communication est développé par le constructeur des terminaux de caisse selon les spécifications du constructeur de l'installation selon l'invention, mais il s'agit là d'opérations très sûres qui n'entraînent aucune complication.

Pour le producteur, l'installation conforme à l'invention lui apporte le moyen d'être présent à proximité des consommateurs sur le lieu du choix, de sorte que le producteur peut apprécier rapidement la rentabilité des actions menées.

Pour le consommateur, l'installation conforme à l'invention redonne les valeurs humaines de "petit commerce" ou "commerce de proximité", grâce à la personnalisation de l'acceuil et par la mise en place d'un service sympathique et gratifiant.

Le consommateur trouve aussi, bien entendu, un intérêt financier évident d'autant plus perceptible que les remises sont déduites immédiatement de la somme à payer à la caisse, alors que beaucoup de systèmes de coupons et de remises supposent une attente parfois longue de remboursement à posteriori.

L'installation permet une liaison par terminal d'ordinateur personnel, tel que celui qui a été généralisé en France sous le nom commercial de "MINITEL".

Pour illustrer l'invention, on a choisi l'exemple d'un magasin de détail en libre service mais l'invention a de nombreuses autres applications, y compris dans les services : centres et parcs de loisirs et d'attraction, clubs de vacances, compagnies de transport par abonnements, grands magasins etc.

## Revendications

**1-** Procédé pour étudier et utiliser le comportement d'usagers devant procéder à des choix, notamment dans des sites où sont proposés des produits et/ou des services, en vue d'effectuer des prévisions et de concevoir des incitations de choix, du type prévoyant :
- à l'entrée d'un site, la communication à des usagers d'informations sur des produits et/ou services sélectionnés et associés à des signes d'identification,
- à la sortie du site, la remise d'un ou plusieurs avantages résultant des choix exercés réellement sur le site par chaque usager, caractérisé en ce que :
- on affecte à chaque produit et/ou service des signes d'identification d'une part en clair et d'autre part sous forme de données codées (M, N, O, P, Q) exploitables par des moyens informatiques,
- on sélectionne des produits et/ou services et l'on détermine pour chacun de ceux-ci un avantage destiné à des usagers,
- on identifie chaque usager (U) par des données codées exploitables par des moyens informatiques,
- pour chaque usager considéré individuellement, on désigne des produits et/ou services parmi ceux qui ont été sélectionnés, en fonction de l'identification dudit usager,
- on communique à chaque usager d'une part les seules informations en clair (91-92) correspondant aux produits et/ou services désignés, et, d'autre part, l'énoncé de l'avantage correspondant, en les imprimant sur place, sur une feuille (97-98) que chaque usager (U) est susceptible de conserver et de consulter pendant tout son séjour sur le site,
- on lit et l'on mémorise par des moyens informatiques, en un seul ensemble indissociable d'une part les données codées d'identification de chaque usager et, d'autre part, les données codées correspondant aux données en clair communiquées,
- à la sortie du site, on identifie chaque usager (U),
- à la sortie du site, on identifie chaque produit et/ou service choisi sur le site par chaque usager, au moyen de données codées, on les lit et on les mémorise par des moyens informatiques,
- parmi ces données codées, on détecte éventuellement celles qui ont été mémorisées avec les données codées d'identification de chaque usager,
- on remet à chaque usager ayant choisi au moins un produit et/ou service désigné, l'avantage correspondant.

**2-** Procédé selon la revendication 1, caractérisé en ce que l'on identifie chaque usager par un code individuel figurant sur un objet portatif tel qu'une carte (99), préalablement remis en contrepartie d'informations communiquées par chaque usager, notamment lors d'une ouverture de crédit, de la concession de facilités de paiement ou d'une autorisation d'accès.

**3-** Procédé selon la revendication 1, caractérisé en ce que l'on identifie chaque usager (U) par un code individuel attribué lors de l'arrivée de l'usager sur le site, en contrepartie d'informations communiquées par chaque usager, et devant figurer sur un objet portatif tel qu'une carte (99).

**4-** Procédé selon la revendication 1, caractérisé en ce que l'on procède à trois sélections distinctes parmi tous les produits et/ou services proposés sur le site :
- la première comprenant des produits et/ou services pour lesquels on remet un avantage indistinctement à tous les usagers, y compris ceux qui ne sont pas identifiés, ayant choisi au moins l'un de ces produits et/ou services,
- la deuxième comprenant des produits et/ou services pour lesquels on remet un avantage aux seuls usagers identifiés et ayant choisi au moins l'un de ces produits et/ou services,
- la troisième comprenant des produits et/ou services désignés parmi ceux de la deuxième sélection en fonction des caractéristiques de chaque usager identifié et pour lesquels on ne remet un avantage qu'aux seuls usagers dont les données codées sont associées aux données codées desdits produits et/ou services désignés.

**5-** Procédé selon la revendication 1, caractérisé en ce que l'on imprime en clair, sur la feuille (98) remise à l'entrée du site, le nom et, le cas échéant, le prénom de certains au moins des usagers identifiés.

**6-** Installation pour étudier et utiliser le comportement d'usagers devant procéder à des choix, notamment dans des sites où sont proposés des produits et/ou des services, en vue d'effectuer des prévisions et de concevoir des incitations de choix, du type comprenant un réseau informatique de base (I, J, K) composé d'au moins un ordinateur central propre au site, et, pour chaque sortie du site, d'un scanneur (C, D) de saisie de codes d'identification de produits et/ou services et d'un terminal de calcul (A, B) relié audit scanneur (C, D), et d'une imprimante (G, H) de tickets (R) dits "tickets de caisse" devant être remis à chaque usager, caractérisée en ce qu'elle comprend un second réseau informatique comportant :
- une multiplicité d'objets portatifs (99) portant des données codées d'identification individuelle d'usagers (U),
- au moins un ensemble (1) situé à l'entrée du site et formé d'un lecteur (10) d'objets portatifs (99) d'identification d'usagers (U), associé à un moyen de lecture des données codées d'identification d'usagers, d'un distributeur (11) de feuilles à imprimer (97), d'une imprimante (12) et d'un distributeur (13) de feuilles imprimées (98),
- autant de terminaux de sortie (4) qu'il y a de terminaux de calcul (A-B) à chaque sortie du site, chacun de ces terminaux de sortie (4) étant relié d'une part à un terminal de calcul (A-B) comprenant un lecteur de données codées d'identification de produits et/ou services et un lecteur (40) d'objets portatifs (99) d'identification d'usagers.
- au moins un ordinateur central (2).

**7-** Installation selon la revendication 6, caractérisée en ce que le distributeur de feuilles à imprimer est un margeur (11) qui contient des feuilles découpées (97).

**8-** Installation selon la revendication 6, caractérisée en ce que le distributeur de feuilles à imprimer est une bobine des feuilles non découpées.

**9-** Installation selon la revendication 6, caractérisée en ce que les feuilles à imprimer (97) présentent des zones pré-imprimées (95, 96) et des zones vierges (93, 94).

**10-** Installation selon la revendication 6, caractérisée en ce que les feuilles (98) issues du distributeur (13) ne présentent que des zones imprimées (91, 92, 95, 96).

**11-** Installation selon la revendication 10, caractérisée en ce que des feuilles (98) issues du distributeur (13) présentent des mentions (91, 92) spécifiques à certains usagers individuels ou à certaines catégories d'usagers.

**12-** Installation selon la revendication 6, caractérisée en ce que certains au moins des tickets de caisse (R) remis à des usagers présentent une liste de produits et/ou services choisis par lesdits usagers, le prix de chacun de ces produits et/ou services, et au moins un montant venant en soustraction du total des prix, ce montant constituant un avantage consenti à l'usager correspondant.
